Europäisches Patentamt

European Patent Office

Office européen des brevets

(19)

(11) **EP 1 235 049 A2**

(12) **EUROPÄISCHE PATENTANMELDUNG**

(43) Veröffentlichungstag:
   **28.08.2002 Patentblatt 2002/35**

(51) Int Cl.⁷: **G01B 9/04**

(21) Anmeldenummer: **02100052.6**

(22) Anmeldetag: **23.01.2002**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(30) Priorität: **21.02.2001 DE 10108240**

(71) Anmelder: **Leica Microsystems Heidelberg GmbH
   69120 Heidelberg (DE)**

(72) Erfinder:
   • **Olschewski, Frank
     69118, Heidelberg (DE)**
   • **Nickel, Jochen
     68165 Mannheim (DE)**

(74) Vertreter: **Reichert, Werner F., Dr.
   Leica Microsystems AG,
   Konzernstelle Patente + Marken,
   Ernst-Leitz-Strasse 17-37
   35578 Wetzlar (DE)**

(54) **Verfahren und Anordnung zur Abbildung und Vermessung mikroskopischer dreidimensionaler Strukturen**

(57) Die gegenwärtige Erfindung betrifft ein Verfahren und eine Anordnung zur Abbildung und Vermessung mikroskopischer dreidimensionaler Strukturen. Dabei wird ein Datensatz in 3-dimensionaler Form auf einem dem Mikroskop zugeordneten Display (27) dargestellt. Mindestens eine beliebige Schnittposition und ein beliebiger Drehwinkel werden vom Benutzer vorgegeben. Das Drehen der 3-dimensionalen Darstellung auf dem Display (27) wir ausgeführt, bis eine in der 3-dimensionalen Form enthaltene Struktur eine dem Benutzer geeignet erscheinende Darstellung auf dem Display (27) wiedergibt. Anschließend werden die entsprechenden Analysevorgänge an der Struktur durchgeführt.

Fig. 2

EP 1 235 049 A2

**Beschreibung**

Die Erfindung betrifft ein Verfahren zur Abbildung, Vermessung und Interaktion mit mikroskopischen dreidimensionalen Strukturen. Ferner betrifft die Erfindung eine Anordnung zur Abbildung und Vermessung mikroskopischer 3-dimensionaler Strukturen. Im besonderen betrifft die Erfindung eine Anordnung zur Abbildung und Vermessung mikroskopischer dreidimensionaler Strukturen, mit einem Mikroskop, einem dem Mikroskop zugeordneten Display, einem PC und einem dem PC zugeordneten Eingabegerät.

Bei der Arbeit am Mikroskop sind — je nach Anwendung unterschiedlich — immer wieder Bilddetails im Blickfeld des Benutzers. In allen mikroskopischen Anwendungen existiert z.B. eine Klasse von Funktionen zur Vermessung morphologisch-densiometrischer Eigenschaften. Morphologie analysiert Formund Geometriemerkmale, Densiometrie analysiert Merkmale der Intensitätsverteilung, wobei in der Praxis häufig Mischformen anzutreffen sind. Diese Klasse von Funktionen bietet auch die Basis für zahlreiche automatische Einstellvorgänge. In heutigen Systemen arbeitet der Benutzer mit Bilddetails indem er Sie mit einem geeigneten graphischen Mechanismus auf dem Bildschirm markiert und somit eine Geometrie definiert und eine gewünschte Funktion des Systems anwählt wobei die hier beschriebene Reihenfolge willkürlich ist. Dies gestaltet sich für dreidimensionale Geometrien schwierig.

3-dimensionale geometrischer Strukturen innerhalb von 3-dimensionalen Bildstapeln, die aus den durch ein Mikroskop aufgenommenen Daten generiert wurden, sind mental schwierig zu erfassen. In der Praxis haben viele Benutzer nur ein mangelhaftes 3-dimensionales Vorstellungsvermögen, da 3D Modelle mental einen komplizierten Konstruktionsprozess und somit einige Übung voraussetzt. Dies ist insbesondere schwierig, wenn man mit den Rohdaten eines 3D Mikroskops in Form von Schnittbildern arbeitet. In diesem Fall muss der Benutzer mental die Dreidimensionalität komplett rekonstruieren. Die Vermessung schräg im Volumen verlaufender Längen, die nicht in einem Schnitt erfasst sind, macht auf der Basis der erfassten Schnitte eine aufwendige Navigation durch den Stapel der erfassten 2-dimensionalen Bilddaten notwendig. Fehlt es an einer 3-dimensionalen Vorstellungskraft, so kann nur mit erheblichen Aufwand die interessierende Struktur identifiziert werden.

Konkrete Beispiele aus der Mikroskopie für Aktionen in deren Kontext dieses Problem auftritt sind:

a) Statistische Analysen lokaler Eigenschaften von Bildern und volumetrischen Bildstapeln (Profile, Histogramme, Kolokalisationen, Material Rauhigkeit).

b) Beobachtung physiologischer Reaktionen lebender Zellen und einzelner Kompartments (von Stoffwechsel/ Struktur unterscheidbare Teile einer Zelle) derselben.

c) Zoomvorgänge.

d) Ausrichtung des Bildfeldes.

e) Steuerung von Aktoren.

f) Definition lokal unterschiedlicher Anregungs- und Detektions- Parameter.

g) Automatisierte Regelvorgänge unter Zuhilfenahme von Geometriedaten.

Die Publikation von Demandolx D., Davoust J.: MULTICOLOUR; ANALYSIS AND LOCAL IMAGE CORRELATION IN CONFOCAL MICROSCOPY, *Journal of Microscopy*, Vol. 185, Pt1, January 1997, Seiten 21-36; offenbart eine Vielzahl von densiometrischen Analyseverfahren. Die einzelnen Analysen benötigen sowohl eine geometrische Selektion des zu analysierenden Objektes als auch geometrische Selektionen in einem speziellem Analyseraum, dem Cytofluorogram. Die Publikation von Wedekind P., Kubitscheck U., Peters R.: SCANNING MICRO-PHOTOLYSIS: A NEW PHOTOBLEACHING TECHNIQUE BASED ON FAST INTENSITY MODULATION OF A SCANNED LASER BEAM AND CONFOCAL IMAGING, im *Journal Of Microscopy*, Vol. 176., Pt 1. October, 1994, Seiten 23-33, offenbart eine Möglichkeit der Überlagerung geometrischer Elemente mit einem aufgenommenen Bild von einem Objekt, die auf der Probe unterschiedlich beleuchtet werden, und durch den damit verbundenen Energietransport Veränderungen in der Probe bewirken.

Standard Mikroskopsysteme stellen - meistens in Software realisiert - hierfür passende Geometriemodelle zur Verfügung (Polygone, Rechtecke, allgemein ROI = Region Of Interesst), die der Benutzer vorgibt. In der Regel erfordert dies einen zeitaufwendigen interaktiven Prozess. Die Region wird mit der Maus auf dem Display eines Computersystems gezeichnet. Anschließend wird es der entsprechenden Automatisierungsfunktion zur Verfügung gestellt

Dieser Erfindung liegt die Aufgabe zugrunde ein Verfahren zu schaffen, bei dem die Vermessung 3-dimensionaler Strukturen auch ohne eine räumliche Vorstellungskraft möglich ist. Hinzu kommt, dass mit dem erfindungsgemäßen Verfahren auf einfache Weise eine Definition eines aufzunehmenden Teilvolumens möglich ist.

Die objektive Aufgabe wird gelöst durch ein Verfahren, das durch die folgenden Schritte gekennzeichnet ist:

• Darstellen eines Datensatzes in 3-dimensionaler Form auf einem dem Mikroskop zugeordneten Display;

• Vorgeben mindestens einer beliebigen Schnittposition und beliebiger Drehwinkel;

• Drehen der 3-dimensionalen Darstellung auf dem Display bis eine in der 3-dimensionalen Form enthaltene Struktur eine dem Benutzer geeignet erscheinende Darstellung auf dem Display wiedergibt; und

• Durchführen eines Analysevorgangs an der Struktur.

Eine weitere Aufgabe der Erfindung ist es eine Anordnung zu schaffen, bei dem die Vermessung 3-dimensionaler Strukturen in einem aufgenommenen Probenvolumen möglich ist. Dabei soll die Anordnung unabhängig von dem 3-dimensionalen Vorstellungsvermögens des Benutzers sein. Hinzu kommt, dass auf beliebig ausgewählte Teilvolumina des aufgenommenen Probenvolumens spezielle Scanparameter angewendet werden können.

Die objektive Aufgabe wird gelöst durch eine Anordnung die dadurch gekennzeichnet, dass

o ein erstes Fenster auf dem Display zur Darstellung von Schnittebenen in einem aufgenommenen Probenvolumen aus jeweils unterschiedlichen Blickrichtungen,

o ein zweites Fenster auf dem Display zur Darstellung einer Rotationssicht des aufgenommenen Probenvolumens,

o ein drittes Fenster auf dem Display zur visuellen Darstellung der Koordinaten, der Rotationswinkels und der Schnittposition und

o jeweils ein Fadenkreuz in der Darstellung einer jeden Schnittebene zum interaktiven Verändern der Schnittposition vorgesehen ist, wobei der Bildinhalt im ersten Fenster entsprechend der Veränderung aktualisierbar ist.

Der Vorteil der Erfindung ist, dass die Vermessung 3-dimensionaler geometrischer Strukturen innerhalb von 3-dimensionalen Bildstapeln, die mit einem Mikroskop aufgenommen wurden, erheblich vereinfacht ist. Die Struktur 3-dimensionaler Körper ist mental schwierig zu erfassen, insbesondere wenn man mit den vom Mikroskop aufgenommenen Rohdaten eines in Form von Schnittbildern arbeitet. In diesem Fall muss der Benutzer mental die Dreidimensionalität rekonstruiere, um innerhalb der Probe die Orientierung zu behalten. Das erfindungsgemäße Verfahren und die Anordnung erleichtern dies erheblich, indem die benötigten Messmittel und Einstellvorrichtungen sowie eine rechentechnisch ermittelte Rekonstruktion parallel präsentiert wird. Dies führt zu kognitiver Entlastung des Benutzers, schnellerem arbeiten und somit ökonomischerer Nutzung des Geräts (Arbeit/Zeit). Vermessungsaufgaben, wie z.B. schräg im Volumen verlaufender Längen, die nicht in einem Schnitt erfasst sind, werden erheblich erleichtert. Ist eine interessierende Struktur nicht von einem Schnitt erfasst, dann muss Sie nach herkömmlichen Methoden auf der Basis der erfassten Schnitte mit einer Navigation durch den Bildstapel in einem zeitaufwendigen Prozess gefunden werden. Dies ist bei mangelndem 3-dimensionalen Vorstellungsvermögen erheblich erschwert, wird aber durch das erfindungsgemäße Verfahren und die Anordnung erleichtert. In der hier gewählten Lösung reduziert sich dies auf gewählten Lösung reduziert sich dies auf ein zurechtdrehen und vermessen. Diese kombinierte Auswertung minimaler Benutzereingaben (Mausklick) und der erfassten Mikroskopiebilddaten zur Ermittlung von geeigneten Schnittebenen erhöht die Ergonomie der gesamten Anordnung erheblich. Ferner erhält der Benutzer eine einfache Möglichkeit zur Navigation durch den Bildstapel ohne dabei die Orientierung zu verlieren. Weiterhin ist vorteilhaft, dass mit dem Verfahren die Daten 3-dimensionaler Teilvolumina direkt an die Mikroskopsteuerung übergeben werden können. Die Mikroskopsteuerung kann dann auf das bestimmte Probenvolumen angepasste bzw. ausgewählte Scanparameter anwenden.

In der Zeichnung ist der Erfindungsgegenstand schematisch dargestellt und wird anhand der Figuren nachfolgend beschrieben. Dabei zeigen:

Fig. 1    eine schematische Darstellung eines konfokalen Scanmikroskops, bei dem gegenwärtige Erfindung Anwendung findet;

Fig. 2    eine Ausführungsform eines Userinterfaces zur graphischen Darstellung der drei verschiedenen Ebenen die durch ein Probenvolumen gelegt werden;

Fig. 3    eine schematische Darstellung eines Quadermodells zur Darstellung des Probenvolumens und einer Hilfe hierzu, um eine Orientierung der Ansicht bei der Drehung des Probenvolumens zu erreichen;

Fig. 4     eine weitere Ausführungsform eines Userinterfaces zum Bestimmen einer Länge in einem aufgenommenen Probenvolumen; und

Fig. 5     eine dritte Ausführungsform zum Vermessen von Flächen und Erzeugen von abgegrenzten Volumina in dem aufgenommenen Probenvolumen.

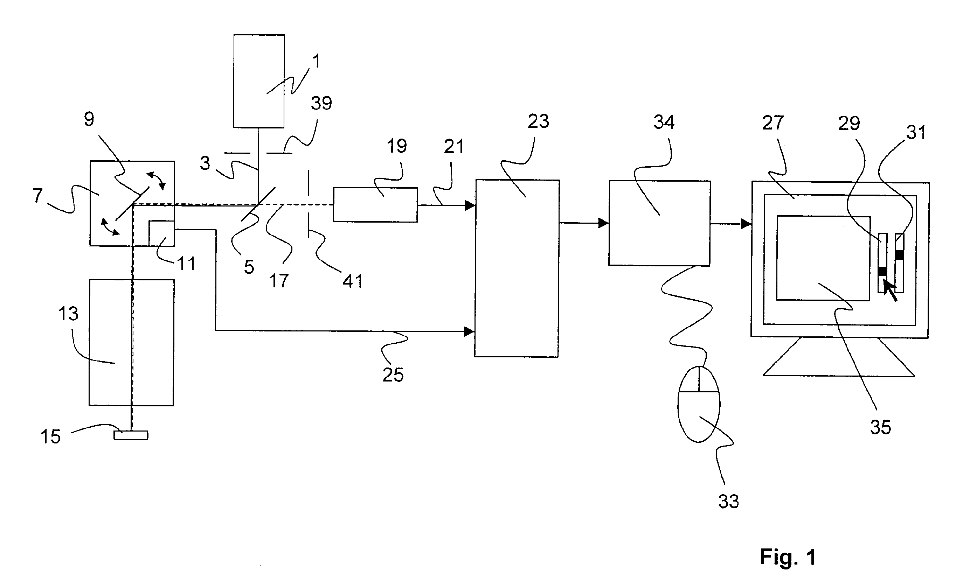

Fig. 1 zeigt schematisch ein konfokales Scanmikroskop. Der von einem Beleuchtungssystem 1 kommende Lichtstrahl 3 wird von einem Strahlteiler 5 zum Scanmodul 7 reflektiert, das einen kardanisch aufgehängten Scanspiegel 9 beinhaltet, der den Strahl durch die Mikroskopoptik 13 hindurch über bzw. durch das Objekt 15 führt. Der Lichtstrahl 3 wird bei nicht transparenten Objekten 15 über die Objektoberfläche geführt. Bei biologischen Objekten 15 (Präparaten) oder transparenten Objekten kann der Lichtstrahl 3 auch durch das Objekt 15 geführt werden. Dies bedeutet, dass verschiedene Fokusebenen des Objekts 15 nacheinander durch den Lichtstrahl 3 abgetastet werden. Die nachträgliche Zusammensetzung ergibt dann ein 3-dimensionales Bild des Objekts 15. Der aus einer Vielzahl von 2-dimensionalen Bildern bestehende Bildstapel wird zu einem 3-dimensionalen Bild zusammengesetzt. Der vom Beleuchtungssystem 1 kommende Lichtstrahl 3 ist als durchgezogene Linie dargestellt. Das vom Objekt 15 ausgehende Licht 17 gelangt durch die Mikroskopoptik 13 und über das Scanmodul 7 zum Strahlteiler 5, passiert diesen und trifft auf Detektor 19, der als Photomultiplier ausgeführt ist. Das vom Objekt 15 ausgehende Licht 17 ist als gestrichelte Linie dargestellt. Im Detektor 19 werden elektrische, zur Leistung des vom Objekt 15 ausgehenden Lichtes 17, proportionale Detektionssignale 21 erzeugt und an die Verarbeitungseinheit 23 weitergegeben. Die im Scanmodul 7 mit Hilfe eines induktiv oder kapazitiv arbeitenden Positionssensors 11 erfassten Positionssignale 25 werden ebenfalls an die Verarbeitungseinheit 23 übergeben. Es ist für einen Fachmann selbstverständlich, dass die Position des Scanspiegels 9 auch über die Verstellsignale ermittelt werden kann. Die eingehenden, Analogsignale werden in der Verarbeitungseinheit 23 zunächst digitalisiert. Die Signale werden an einen PC 34 übergeben, an dem eine Eingabegerät 33 angeschlossen ist. Der Benutzer kann bezüglich der Verarbeitung der Daten mittels der Eingabegerät 33 entsprechende Selektionen treffen. In Fig. 1 ist als eine Eingabegerät 33 eine Maus dargestellt. Es ist jedoch für jeden Fachmann selbstverständlich, dass auch Tastatur, Joystick, Spracheingabe und ähnliches als Eingabegerät 33 verwendet werden können. Auf einem Display 27 wird z.B. ein Abbild 35 des Objekts 15 dargestellt. Hinzu kommt, dass zusätzlich auf dem Display 27 auch Einstellelemente 29, 31 für die Bildaufnahme dargestellt werden können. In der hier gezeigten Ausführungsform sind die Einstellelemente 29, 31 als Slider dargestellt. Jede andere Ausgestaltung liegt im handwerklichen Können eines Fachmanns Der PC 34 gibt die entsprechenden Daten über die Leitung 37 an die Verarbeitungseinheit 23 weiter. Die Positions- und Detektionssignale werden in der Verarbeitungseinheit 23 in Abhängigkeit von den jeweils gewählten Einstellungen zusammengesetzt und auf dem Display 27 angezeigt. Für die Erfindung ist es unerheblich in welcher Form die Einstellelemente auf dem Display 27 dargestellt werden. Das bei einem konfokalen Scanmikroskop üblicherweise vorgesehene Beleuchtungspinhole 39 und das Detektionspinhole 41 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

Das Verfahren zur Abbildung und strukturellen Vermessung mikroskopischer 3-dimensionaler Strukturen in einem Objekt 15, wobei das mikroskopische Bild mit einem Mikroskop aufgenommen wurde. Dabei kann die 3-dimensionale Struktur in beliebiger räumlicher Lage innerhalb des Objekts 15 bzw. des mikroskopischen Bildes angeordnet sein. Das mikroskopische Bild kann als aufgenommenes Volumen $\mathbf{I}(\mathbf{x})$ beschrieben werden, wobei $\mathbf{I}(\mathbf{x})$ der Vektor der aufgenommenen Spektralanteile (Kanäle oder spektrale Aufnahme mit den SP-Modul) an der Volumenposition $\mathbf{x}$ des Voxels definiert. Mit einem Rotationsvektor

$$\mathbf{a} = \begin{pmatrix} \alpha_x \\ \alpha_y \end{pmatrix}$$

kann man ein verdrehtes Objekt 15 bzw. mikroskopisches Bild erzeugt werden. Hier sind die Einzelwinkel $\alpha_x$ und $\alpha_y$ die Rotationen um die entsprechende Achse im mathematisch positiven Sinn (alternativ können - ohne Beschränkung der Allgemeinheit - auch yz oder xz Winkel Komponenten genutzt werden, da die Verdrehung eines Körpers in drei Dimensionen nur zwei Freiheitsgerade hat). Durch die Rotationsmatrix

$$\mathbf{M}(\mathbf{a}) = \begin{pmatrix} 1 & 0 & 0 \\ 0 & \cos\alpha_x & -\sin\alpha_x \\ 0 & \sin\alpha_x & \cos\alpha_x \end{pmatrix} \cdot \begin{pmatrix} \cos\alpha_y & 0 & \sin\alpha_y \\ 0 & 1 & 0 \\ -\sin\alpha_y & 0 & \cos\alpha_y \end{pmatrix}$$

kann man ein verdrehtes Volumen $\mathbf{I}(\mathbf{y})$ in den Koordinaten $\mathbf{y} = \mathbf{M}(\mathbf{a})\mathbf{x}$ beschreiben. Diese Form der Beschreibung ist Stand der Technik in der Computergraphik (siehe: Foley, van Dam, Feiner, Hughes (1996): Computer Graphics - Principle and Practice. 2nd Ed. Reading, Massachusets: Addison Wesley, p 215) .

Unter zu Hilfenahme der Technik des "Ortho Sectioning" kann man aus diesem rotierten Volumen beliebige Schnitte erzeugen. Hierzu wird ein Ortsvektor in den rotierten Koordinaten $\mathbf{y}_0 = (x_0\ y_0\ z_0)^T$ vorgegeben, der implizit drei zweidimensionale Ebenen

- Ebene 1: $\varepsilon_1 : \mathbf{t}_{xy} = (x, y) \mapsto \mathbf{y}(\mathbf{t}_{xy}) = (x, y, z = z_0)$
- Ebene 2: $\varepsilon_2 : \mathbf{t}_{xz} = (x, z) \mapsto \mathbf{y}(\mathbf{t}_{xz}) = (x, y = y_0, z)$
- Ebene 3: $\varepsilon_3 : \mathbf{t}_{yz} = (y, z) \mapsto \mathbf{y}(\mathbf{t}_{yz}) = (x = x_0, y, z)$

definiert. Aufgrund der oben angegebenen Matrix-Relation lassen sich diese einzelnen Ebenen durch

$$x(t_{ab}) = M(a)^{-1}y(t_{ab})$$

im Originalvolumen bestimmen.

Von Interesse sind die Bilder entlang der schrägen Schnitte, wobei diese Bilder durch die Wahl von verschiedenen Interpolationsverfahren rekonstruiert werden können. Interpolationsverfahren sind etablierter Stand der Technik und die meisten dem Fachmann hinreichend bekannten Verfahren können z.B. in Lehmann, Gönner, Spitzer (1999): Survey: Interpolation Methods in Medical Image Processing. IEEE Transactions on Medical Imaging, Vol 18. No 11. pp 1049 - 1075 nachgeschlagen werden. Alle dort aufgeführten Methoden haben in Zusammenhang mit dem erfindungsgemäßen Verfahren ihre Berechtigung und können als Optionen ausgestaltet sein, die zu unterschiedlichen Qualitäten der Darstellung führen. Derartige Interpolationsverfahren sind beim "Ortho Sectioning" nicht notwendig, hier jedoch essentiell. Zur Interpolation werden aus benachbarten Voxel durch lineare Gewichtung die Werte an den Ebenenpositionen bestimmt Diese erweiterte Form des "Ortho-Sectioning" und die drei resultierenden Bilder $\mathbf{I}(\mathbf{x}_{ab})$ ermöglichen dann die Visualisierung beliebiger schrägstehender Schnitte und den Zugriff auf beliebige schrägstehende lineare geometrische Strukturen im Bild.

Das erfindungsgemäße Verfahren kann wie folgt zusammengefasst werden. Zum Drehen des aufgenommenen 3-dimensionalen Bildes werden die Rotationswinkel vergeben. Aus den Rotationswinkeln wird eine Transformationsmatrix berechnet. Die gewünschte Schnittposition innerhalb des 3-dimensionalen wird bestimmt und anschließend die Ebenen berechnet. Es erfolgt die Rücktransformation Ebene in den Originalraum und aus den Volumendaten erfolgt durch Interpolation die Berechnung der Schnittbilder. Die so berechneten Schnittbilder werden dann als Ergebnis auf dem Display 27 dargestellt

Es ist dem Fachmann klar, dass sich dieses Verfahren nicht nur auf die erfassten Rohdaten, sondern auch auf abgeleitete Daten (z.B. Ratio), verbesserte Volumen (inverse Filter) oder beliebig Manipulierte Volumen anwenden lässt.

Wie bereits oben erwähnt wird durch das Mikroskop eine Vielzahl 2-dimensionaler Bilder aufgenommen und schließlich zu dem 3-dimensionalen Bildstapel zusammengesetzt. Mit dem erfindungsgemäßen Verfahren kann auch durch den Bildstapel navigiert werden. Um das Verfahren besser an die Sinneswahrnehmung des Benutzers anzupassen und es gehirnkompatibel durchzuführen, bietet sich folgendes an. Es wird eine beliebige Schnittposition und ein beliebiger Rotationswinkel vergeben, wobei eine Initialeinstellung als Defaulteinstellung gegeben sein kann. Die Berechnung der resultierenden Schnittebenen erfolgt nach dem oben beschriebenen Verfahren. Die resultierenden Schnittebenen und die Schnittgeometrie werden auf dem Display 27 dargestellt. Die Visualisierung erfolgt als ein Drahtgittermodell oder die Visualisierung des aufgenommenen Bildes kann auch durch eine 3-dimensionale Visualisierung erfolgen, wobei die Rotation mit dem Blickwinkel übereinstimmt und die Schnitte im 3-dimensionalen Volumen angedeutet sind. Ferner ist ebenfalls eine Kombination auch dem Drahtgittermodel und der 3-dimensionale Visualisierung denkbar. Für eine vereinfachte Einstellung von Rotationswinkel und Schnittebene sind Einstellelemente auf dem Display 27 vorgesehen. Die Interaktive Veränderung der Parameter Winkel und Schnittebene erfolgt durch den Benutzer mit gleichzeitiger visueller Kontrolle. Die Veränderung kann dabei solange erfolgen, bis die ausgesuchte Struktur auf dem Display 27 in der vom Benutzer gewünschten Form dargestellt ist.

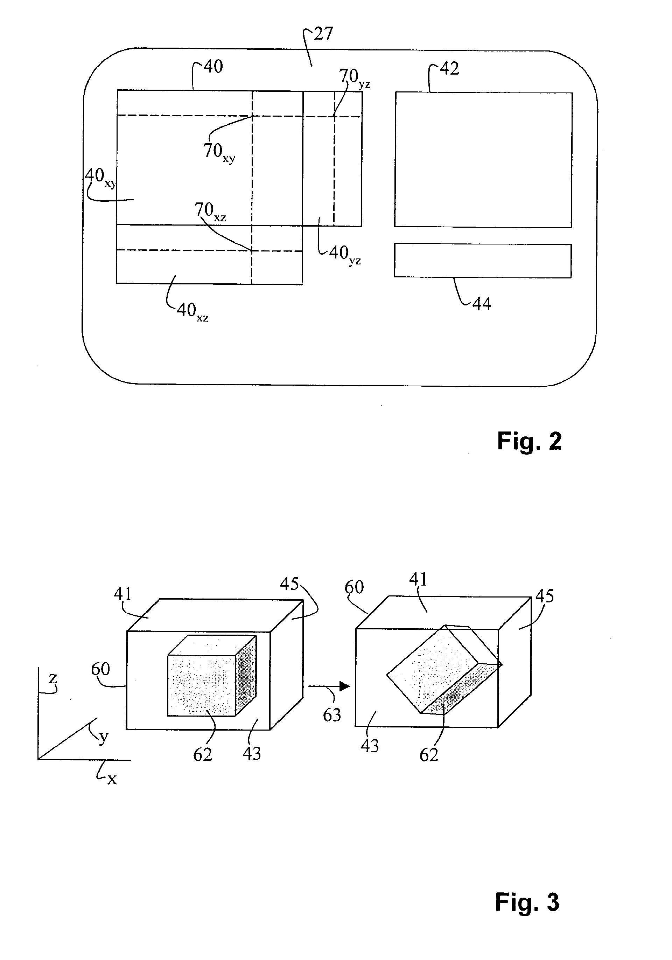

Fig. 2 zeigt hierzu ein mögliches auf dem Display 27 darzustellendes Interface, mit dem den Benutzer die Bilder und dazugehörige Lagedaten präsentiert werden. In der Darstellung auf dem Display 27 wird die "Ortho Sectioning" Sicht mit der Sicht eines Volumenrenderers bzw. einem Drahtgitterobjekt (siehe Fig. 3) kombiniert. Fig. 2 zeigt eine bevorzugte Ausgestaltung, wobei die Realisation dem handwerklichen Können des Fachmanns überlassen bleibt. Auf dem Display 27 sind mehrere Einzelelemente als virtuelle Bedienelemente ausgestaltet. Diese Einzelelemente sind durch Software im PC 34 realisiert und sind durch die Eingabegerät 33, wie z.B. einer Maus, einer Spracheingabe oder eines Touch-Screens, vom Benutzer direkt manipulierbar. In der bevorzugten Ausgestaltung wird auf dem Display 27 in einem ersten Fenster 40 die Standard "Ortho Sectioning" Sicht dargestellt, die in einem zweiten Fenster 42 um eine Rotationssicht erweitert ist. Die "Orhto Sectioning" Sicht visualisiert im ersten Fenster 40 ein Bild $40_{xy}$ der xy-Ebene 41, ein Bild $40_{xz}$ der xz-Ebene 43 und ein Bild $40_{yz}$ der yz-Ebene 45, dabei werden die Bilder $40_{xy}$, $40_{xz}$ und $40_{yz}$, an den entsprechenden Kanten aneinander gereiht. Die aktuelle Position innerhalb der Bilder $40_{xy}$, $40_{xz}$ und $40_{yz}$ $\mathbf{y}_0 = (x_0\ y_0\ z_0)^T$ wird jeweils durch ein Fadenkreuz $70_{xy}$, $70_{xz}$ und $70_{yz}$ in den angedeutet, wobei in den einzelnen Bereichen durch die Manipulation des Fadenkreuzes $70_{xy}$, $70_{xz}$ und $70_{yz}$ mittels einer Maus oder ein gleichwertiges Eingabegerät die Schnittposition $\mathbf{y}_0 = (x_0\ y_0\ z_0)^T$ interaktiv verändert werden und der Bildinhalt in den einzelnen Bilder $40_{xy}$, $40_{xz}$ und $40_{yz}$ während der Änderung aktualisiert werden kann. Ein drittes Fenster 44 auf dem Display 27 ermöglicht die visuelle Darstellung der Koordinaten und zeigt sowohl den Rotationswinkel als auch die Schnittposition. Die im zweiten Fenster 42 des Displays dargestellte Rotationsvisualisierung stellt sicher, dass die Rotation nach Wunsch des Benutzers verändert werden kann. Zu diesem Zweck sind unterschiedlichste Ausgestaltungen denkbar. Zum einen könnte die Visualisierung durch zwei ineinandergeschachtelte Quadermodelle durch eine Strichgraphik erfolgen, denen ein orthogonales 3-dimensionales Fadenkreuz $70_{xy}$, $70_{xz}$ und $70_{yz}$ überlagert ist, welches die Position $\mathbf{y}_0 = (x_0\ y_0\ z_0)^T$ wiederspiegelt. Die Darstellung der Sicht eines Drahtgitterobjekts mit den Quadermodellen ist in Fig. 3 gezeigt. Ein äußerer Quader 60 repräsentiert die Schnittgeometrie in deren Grenzen die Position $\mathbf{y}_0$ variieren kann. Ebenso repräsentiert der äußere Quader 60 die Ansicht eines zu untersuchenden Volumens 62. Ein Pfeil 63 symbolisiert den Übergang zu der Darstellung des äußeren und des inneren Quaders bei dem der innere Quader 62 gedreht ist und somit das gedrehte Volumen darstellt. Eine entsprechende Software verknüpft die Drehung des inneren Quaders 62 mit Bewegungen der Maus oder ähnlichen Eingabegeräten. Der innere Quader 62 lässt sich durch eine Volumenrekonstruktion des aufgenommenen Objekts 15 ersetzen. Hierzu werden sogenannte Volume Rendering Algorithmen genutzt, die im wesentlichen (je nach Verfahren mehr weniger realistisch) eine Bildentstehung simulieren, wie sie makroskopisch abläuft. Durch diese Methode lässt sich ein realistisches Abbild des Objekts 15 schaffen, was zu einer weiteren kognitiven Entlastung des Benutzers führt.

Die reale Ausgestaltung dieser Komponente liegt in der künstlerischen Gestaltungsfreiheit des ausführenden Fachmanns. Neben den standardisierten Techniken der Visualisierung wie Average, Maximum oder Transparent Projektionen, kommt auch die speziell für Fluoreszenzmikroskopie ausgelegte SFP (simulated fluoreszenz projection) in Frage, sowie sämtliche Tricks der Computergraphik zur Verschönerung bzw. grafischen Ausgestaltung. Die Darstellung des äußeren und des inneren Quaders 60 und 62 in Strichgraphik und die Darstellung des inneren Quaders 62 als Volumenrekonstruktion des aufgenommenen Objekts 15 können kombiniert werden.

Eine weitere Auswertemöglichkeit ist durch die Vermessung von Längen in dem aufgenommenen Volumen gegeben. Zur Ermittlung einer Länge 50 muss eine erste und eine zweite Position 51 und 52 im aufgenommenen Volumen definiert werden. Der geometrische Abstand der beiden Positionen 51 und 52 ist dann die gesuchte Länge 50. Es gibt prinzipiell zwei Möglichkeiten, die es einem Benutzer ermöglichen mit dem Verfahren die Positionen 51 und 52 im Volumen zu definieren.

Es wird in die Ebene navigiert, in der sich die komplette interessierende Länge 50 befindet. Der Benutzer markiert die erste und die zweite Position 51 und 52. Hierzu kann ein Eingabegerät 33, wie z.B. Maus, Panelbox, Spracheingabe etc., herangezogen werden. Eine andere Möglichkeit ist, dass der Benutzer in die Ebene navigiert, in der sich die erste Position 51 befindet und markiert diese. Anschließend navigiert er in die Ebene, in der sich die zweite Position 52 befindet und markiert diese ebenfalls. Nach der Definition der Positionen kann der PC 34 den geometrischen Abstand berechen und visualisieren. Das Navigieren in die Ebene, in der sich die zu vermessende Struktur befindet, ist für den Benutzer sehr viel einfacher und intuitiver anzuwenden und ist für 99,9% aller in der Praxis vorkommenden Messprobleme bereits geeignet.

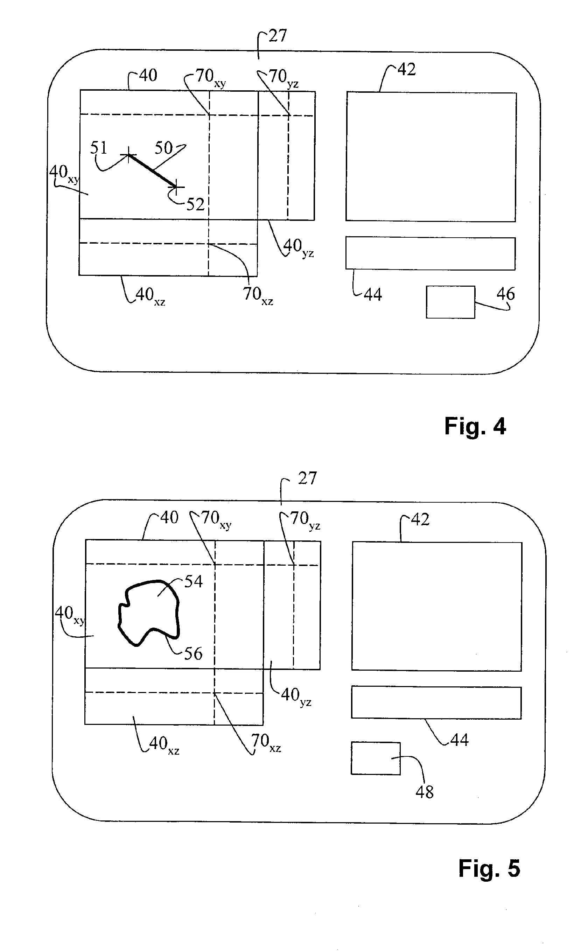

Fig. 4 zeigt eine Darstellung auf dem Display 27, das das Verfahren zur Ermittlung einer Länge 50 dem Benutzer visualisiert. Erweitert man die in Fig. 2 beschriebene Anordnung um Kontrollelemente (nicht dargestellt) zum Zeichnen einer Linie auf die Bilder $40_{xy}$, $40_{xz}$ und $40_{yz}$, so ermöglicht dies die Vermessung schräger Längen. Die numerischen Längen werden in einem auf dem Display 27 dargestellten Koordinatenfenster 46 angezeigt. Zuvor muss jedoch das Volumen entsprechend ausgerichtet werden, damit den Benutzer die zu vermessende Struktur in geeigneter Weise auf dem Display 27 präsentiert wird. Anschließend wir dann die erste Position 51 und die zweite Position 52 bestimmt. Dies kann durch direkte Markierung der Punkte auf dem Display 27 oder durch Verschieben eines Lineal-Objekts (nicht dargestellt) erfolgen. Der PC 34 kann daraus die Länge 50 der Struktur bestimmen. Die Ergebnisse werden den Benutzer z.B. in lesbarer Form im dritten Fenster 44 auf dem Display 27 dargestellt.

Bei dem Verfahren zur Ermittlung einer Länge in einem Volumen kann man unter zu Hilfenahme von Interpolationsverfahren die Intensitätsverteilung (oder ähnliche in den Grauwerten kodierte Parameter) nutzbar machen und visualisieren. Dazu wird, wie bereits oben beschrieben, zuerst das Volumen entsprechend der gewünschten Schnittebene ausgerichtet. Danach kann die interessierende Länge oder die interessierenden Längen im Volumen festgelegt werden. An Hand der festgelegten Längen werden entlang dieser die Intensitäten interpoliert. Das Ergebnis wird in einem Chart dargestellt. Die Interpolation ist notwendig, da die diskrete Topologie des Volumens nicht mit der Topologie der Linie übereinstimmt und angepasst werden muss. Interpolation ist der bestmögliche Schätzer der Verteilung der Intensitäten auf der Linie. Die so präsentierten Intensitätsgraphen erlauben Aussagen über Objektpositionen anhand des numerischen Verlaufs der Intensität. Im Chart sind mehr Details sichtbar als im Bild, das den Grenzen der Wahrnehmung unterworfen sind.

In einer weiteren Ausführungsform der Erfindung werden ebenso schräg liegende Flächen 54 vermessen. Die interessierenden Eigenschaften der schräg liegenden Flächen in einem Volumen können durch die Definition einer ROI (region of interest) bestimmt werden. Die Eigenschaften sind z.B. Fläche, Roundness etc. Eine ROI ist in diesem Kontext eine grafische Figur, die dem Bild überlagert wird, um die Form des Objekts in einer vom Benutzer gewünschten Weise zu beschreiben und als Grundlage für Analysen dient. Wie bei den anderen bereits oben beschriebenen Verfahren muss die Ebene in entsprechender Weise ausgerichtet werden. Die ROI wird durch ein entsprechendes graphisches Zeichentool oder einen Automatismus bestimmt bzw. ausgewählt. Die innerhalb einer geschlossenen Linie 56 liegende Fläche 54 wird als ROI bezeichnet. An Hand der Auswahl wird die Größe berechnet und anschließend das Ergebnis dem Benutzer präsentiert. Beispiele für Automatismen und Halbautomatismen zur ROI Bestimmung werden z.B. in Hastreiter P., Ertl T. (1998): Fast and Interactive 3D-Segmentation of Medical Volume Data. Alpbach, Australia: Proc. IMDSP 98 ("intelligente Scheren") und Blake, Isard: *Active Contours.* Heidelberg: Springer, 1999 ("active Contours") beschrieben und sind als Stand der Technik anzusehen. Ohne die Dreh- und Ausrichtungskomponente des oben beschriebenen Verfahren, sind bestimmte Klassen von ROIs nicht zugänglich.

Fig. 5 zeigt eine Ergänzung bzw. eine weitere Ausführungsform der Anordnung der verschiedenen Fenster auf dem Display 27. In Fig.5 sind Bedienelemente zum Zeichnen der geschlossene Linie 56 auf die ersten Fenster hinzugefügt.

Eine weitere Ausgestaltung des Verfahrens ist es, dass mehrere geschlossene Linie 56 in verschiedenen Ebenen des aufgenommenen Bildes festgelegt werden. Die daraus entstehenden Flächen 54 werden zu einem Stack zusammengesetzt. Es ergibt sich ein 3-dimensionales Volumen, an dem bestimmte Auswertungen durchgeführt werden. Dieses Volumen ist direkt der Vermessung zugänglich. Die Rotation der Ebene ist hier nicht essentiell, vereinfacht allerdings bei bestimmten Volumina die Handhabung erheblich, da sich bei geeigneter Verdrehung des Objekts die geschlossenen Linien 56 der Schnitte durch das Volumen vereinfachen und der Nutzer keine komplizierten Linien zeichnen muss. Nach der Ausrichtung der Ebene in den oben beschriebenen Verfahren, wird aus den Basisflächen ein Volumen konstruiert. Anschließend werden die gewünschten Größen berechnet und auf dem Display 27 dargestellt. Wiederum wird eine erhebliche Zeitersparnis während der Arbeit erreicht.

Eine weitere interessante Anwendung des Verfahren ist es, eine Möglichkeit zu schaffen, die es erlaubt auf einfache Weise die Scanparameter ausschließlich auf ein ausgewähltes Volumen anzuwenden. Nachdem das Volumen nach der oben beschriebenen Weise bestimmt worden ist, kann z.B. der Scanvorgang ausschließlich auf das bestimmte Muster angewendet werden. Die Bestimmung der bestmöglichen Scangeometrie zur Erfassung dieser ausgewählten Struktur bzw. Volumen erfolgt durch Software. Dabei werden die aktuell verwendete Mikroskoptechnik (wie z.B. Objektiv, Pinholegrößen, optische Auflösung) und signaltheoretische Überlegungen (Abtasttheorem, Nyquist) berücksichtigt. Hinsichtlich der Mikroskoptechnik wird in die Berechnung mit einbezogen, was sich technisch mit dem vorhandenen Mikroskoptyp und dem vorhandenen und installierten Equipement (z.B. Objektive) realisieren lässt. Bei den signaltheoretischen Überlegungen spielt es eine Rolle, welche Struktur auflösbar ist und wie oft diese abgetastet werden muss. Sind die erforderlichen Parameter berechnet wird der Scan durchgeführt.

Eine weitere Ausführungsform der Erfindung ist es, dass beliebige 3-dimensionale Kurven (nicht dargestellt) innerhalb des aufgenommenen Bildes definiert werden. Entlang dieser Kurven wird anschließend gescannt bzw. gebleicht. Die 3-dimensionale Kurve wird ebenfalls aus einem Stack mehrerer 2-dimensionaler, geschlossener Linien 56 erzeugt. Das Scanmikroskop wird dann derart gesteuert, dass nur Punkte auf der 3-dimensionalen Raumkurve gescannt werden. Das Scannen ausschließlich auf der 3-dimensionalen Raumkurve ermöglicht sowohl die Datenerfassung von dieser Raumkurve als auch die Veränderung der Probe auf dieser Raumkurve. Die Veränderungen der Probe sind z.B. Bleichen oder Scheiben.

Hinzu kommt, dass mit dem Verfahren eine interaktive Bestimmung eines interessierenden Punktes im Probenvolumen bestimmt wird. Die Beleuchtungsparameter werden exklusiv dann nur für den ausgewählten Punkt verändert. Der Punkt gibt ein kleines Probenvolumen vor, wobei die Übertragung einer Strahlendosis exakt auf das durch den Punkt vorgegebene Probenvolumen ermöglicht ist. Diesem kann optional ein weiterer Scanvorgang zur Beobachtung von Recovery-Vorgängen oder das Schreiben weiterer Strukturen angeschlossen werden, wobei der zweite Scanvorgang ebenso exakt auf das Probenvolumen einwirkt.

**Patentansprüche**

1. Verfahren zur Abbildung und Vermessung mikroskopischer dreidimensionaler Strukturen, **gekennzeichnet durch** die folgenden Schritte:

   • Darstellen eines Datensatzes in 3-dimensionaler Form auf einem dem Mikroskop zugeordneten Display (27);

   • Vorgeben mindestens einer beliebigen Schnittposition und beliebiger Drehwinkel;

   • Drehen der 3-dimensionalen Darstellung auf dem Display (27) bis eine in der 3-dimensionalen Form enthaltene Struktur eine dem Benutzer geeignet erscheinende Darstellung auf dem Display wiedergibt; und

   • Durchführen eines Analysevorgangs an der Struktur.

2. Verfahren nach Anspruch 1, **dadurch gekennzeichnet, dass** bei der Vorgabe des Drehwinkels eine Transformationsmatrix berechnet wird und dass bei Vorgabe der Schnittposition entsprechende Schnittebenen berechnet werden.

3. Verfahren nach Anspruch 2, **dadurch gekennzeichnet, dass** die entsprechenden Schnittebenen auf dem Display (27) dargestellt werden und die Darstellung der Schnittgeometrie in Form eines Drahtgittermodels aus einem äußeren und inneren Quaders (60, 62) realisiert wird.

4. Verfahren nach Anspruch 1, **dadurch gekennzeichnet, dass** eine "Orhto Sectioning" Sicht in einem ersten Fenster 40 aus mehreren Bildern ($40_{xy}$, $40_{xz}$ , $40_{yz}$,) derart zusammengesetzt ist, dass die Bilder $40_{xy}$, $40_{xz}$ und $40_{yz}$, an den entsprechenden Kanten aneinander gereiht werden und wobei die aktuelle Position der Bilder ($40_{xy}$, $40_{xz}$ und $40_{yz}$) durch jeweils ein Fadenkreuz ($70_{xy}$, $70_{xz}$ und $70_{yz}$) angedeutet wird.

5. Verfahren nach Anspruch 1, **dadurch gekennzeichnet, dass** in dem aufgenommenen Volumen mindestens eine zu vermessende Länge (50) bestimmt wird, wobei die Länge (50) durch eine erste und eine zweite Position (51 und 52) festgelegt werden und der geometrische Abstand der beiden Positionen (51 und 52) die gesuchte Länge (50) repräsentiert und dass der Benutzer in die Ebene navigiert, in der sich die erste Position (51) befindet und diese markiert, dass der Benutzer anschließend in die Ebene navigiert, in der sich die zweite Position (52) befindet und diese markiert, und dass an Hand der ersten und zweiten Position (51, 52) der PC (34) den geometrischen Abstand berechnet und visualisiert.

6. Verfahren nach Anspruch 1, **dadurch gekennzeichnet, dass** mindestens eine schräg liegende Fläche oder eine Menge diskreter Punkte in einem Volumen bestimmt wird, dass die mindestens eine schräg liegende Fläche durch ein entsprechendes graphisches Zeichentool oder einen Automatismus bestimmt bzw. ausgewählt wird, und dass die schräg liegende Fläche durch eine geschlossene Linie (56) markiert ist.

7. Verfahren nach Anspruch 1, **dadurch gekennzeichnet, dass**, mehrere Flächen (54) zu einem Stack zusammengesetzt werden, die ein 3-dimensionales Volumen darstellen, und dass an dem Volumen bestimmte Auswertungen durchgeführt werden.

8. Anordnung zur Abbildung und Vermessung mikroskopischer dreidimensionaler Strukturen, mit einem Mikroskop, einem dem Mikroskop zugeordneten Display (27), einem PC (34) und einem dem PC (34) zugeordneten Eingabegerät (33) **dadurch gekennzeichnet, dass**

   o ein erstes Fenster (40) auf dem Display (27) zur Darstellung von Schnittebenen aus jeweils unterschiedlichen Blickrichtungen,

   o ein zweites Fenster (42) auf dem Display (27) zur Darstellung einer Rotationssicht,

   o ein drittes Fenster (44) auf dem Display (27) zur visuellen Darstellung der Koordinaten, der Rotationswinkels und der Schnittposition und

   o jeweils ein Fadenkreuz ($70_{xy}$, $70_{xz}$ und $70_{yz}$) in der Darstellung einer jeden Schnittebene zum interaktiven Verändern der Schnittposition vorgesehen ist, wobei der Bildinhalt im ersten Fenster (40) entsprechend der Veränderung aktualisierbar ist.

9. Anordnung nach Anspruch 8, **dadurch gekennzeichnet, dass** in dem ersten Fenster (40) ein Bild ($40_{xy}$) der xy-Ebene, ein Bild ($40_{xz}$) der xz-Ebene und ein Bild ($40_{yz}$) der yz-Ebene darstellbar ist, wobei die Bilder $40_{xy}$, $40_{xz}$ und $40_{yz}$, an den entsprechenden Kanten aneinander gereiht sind und die aktuelle Position der (Bilder $40_{xy}$, $40_{xz}$ und $40_{yz}$) jeweils durch das Fadenkreuz ($70_{xy}$, $70_{xz}$ und $70_{yz}$) angedeutet ist.

10. Anordnung nach Anspruch 8, **dadurch gekennzeichnet, dass** im ersten Fenster (40) mindestens eine zu vermessende Länge (50) bestimmbar ist, wobei die Länge (50) durch eine erste und eine zweite Position (51 und 52) festgelegt ist und der geometrische Abstand der beiden Positionen (51 und 52) die gesuchte Länge (50) im aufgenommenen Volumen repräsentiert.

11. Anordnung nach Anspruch 8, **dadurch gekennzeichnet, dass** ein graphisches Zeichentool oder ein Automatismus vorgesehen ist, der es dem Benutzer erlaubt im ersten Fenster (40) innerhalb einer ausgewählten Fläche eine geschlossene Linie (56) zu erzeugen, die eine ROI festlegt.

12. Anordnung nach Anspruch 11, **dadurch gekennzeichnet, dass** aus mehreren ROIs ein Volumen konstruierbar ist, und dass ein Computerprogramm zur bestmöglichen Bestimmung der Scangeometrie vorgesehen ist, wobei die aktuell verwendete Mikroskoptechnik und signaltheoretische Überlegungen einbezogen sind.

Fig. 1

27

40

70$_{yz}$

70$_{xy}$

42

40$_{xy}$

70$_{xz}$

40$_{yz}$

40$_{xz}$

44

**Fig. 2**

41

45

z

60

y

62    43

x

60    41    45

63    43    62

**Fig. 3**

**Fig. 4**

**Fig. 5**